# EUROPÄISCHE PATENTSCHRIFT

(11) **EP 3 475 959 B1**
(45) Veröffentlichungstag und Bekanntmachung des Hinweises auf die Patenterteilung: **22.04.2020**
(21) Anmeldenummer: 17733374.7
(22) Anmeldetag: 08.06.2017
(51) Int. Cl.: H01C 7/12, H01H 85/43, H01T 4/08

(54) **ÜBERSPANNUNGSSCHUTZANORDNUNG MIT MINDESTENS EINEM, AUF EINER ERSTEN SEITE EINER N-ECKIGEN TRÄGERPLATTE ANGEORDNETEN, SCHEIBENFÖRMIGEN VARISTOR**
OVERVOLTAGE PROTECTION ASSEMBLY WITH AT LEAST ONE DISC-SHAPED VARISTOR WHICH IS ARRANGED ON A FIRST FACE OF AN N-AGONAL SUPPORT PLATE
DISPOSITIF DE PROTECTION CONTRE LES SURTENSIONS COMPRENANT AU MOINS UNE VARISTANCE EN FORME DE DISQUE DISPOSÉE SUR UN PREMIER CÔTÉ D'UNE PLAQUE DE SUPPORT À N CÔTÉS

(30) Priorität: 22.06.2016 DE 202016003891 U; 10.01.2017 DE 202017000117 U
(43) Veröffentlichungstag der Anmeldung: 01.05.2019
(73) Patentinhaber: DEHN SE + Co KG, 92318 Neumarkt / Opf. (DE)
(72) Erfinder: XU, Niansheng (Jack), Shanghai 201199 (CN); LI, Hongjun (Better), Shanghai 201109 (CN); ZHANG, Dongjun (Daniel), Shanghai 201600 (CN)
(74) Vertreter: Kruspig, Volkmar
(86) Internationale Anmeldenummer: PCT/EP2017/063890
(87) Internationale Veröffentlichungsnummer: WO 2017/220329

(56) Entgegenhaltungen:
- WO-A1-2010/020452
- CN-U- 204 668 940
- US-A- 5 500 782
- US-A1- 2003 103 308

## Beschreibung

Die Erfindung betrifft eine Überspannungsschutzanordnung mit mindestens einem, auf einer ersten Seite einer n-eckigen Trägerplatte angeordneten, scheibenförmigen Varistor, mindestens einem Gasableiter sowie mindestens einer thermischen Abtrenneinrichtung, welche mit mindestens einem Varistor im engen thermischen Kontakt steht, wobei die vorgenannten Bauteile von einem Außengehäuse umgeben und Mittel zum elektrischen Anschluss zum Verlöten auf einer Leiterplatte vorgesehen sind, gemäß Oberbegriff des Anspruchs 1.

Aus der CN 000204668940 U ist eine in einem Gehäuse befindliche Überspannungsschutzanordnung vorbekannt, wobei die Anordnung mehrere, räumlich in Reihe angeordnete, scheibenförmigen Varistor umfasst.

Zwischen mindestens zwei der räumlich in Reihe angeordneten, scheibenförmigen Varistoren ist eine thermische Abtrenneinrichtung befindlich, welche in einem engen thermischen Kontakt zum jeweiligen Varistor steht.

Die dort vorgesehene räumliche Reihenschaltung umfasst darüber hinaus einen Gasentladungsableiter.

Bedingt durch die Anordnung der Thermosicherung innerhalb der Sandwich-Konstruktion der Varistoren kann nur der jeweils benachbarte Varistor hinsichtlich seines thermischen Verhaltens überwacht werden. Eine Überprüfung des Zustands des eingesetzten Gasableiters ist nicht möglich. Weiterhin führt die bekannte Sandwich-Anordnung der Varistoren zu Problemen beim Erreichen oder Sicherstellen notwendiger elektrischer Trennungsabstände.

Ganz grundsätzlich kann die Wärmeenergie der thermisch zu überwachenden Varistoren gemäß dem geschilderten Stand der Technik nur unzureichend und nicht schnell genug zu den thermischen Abtrenneinrichtungen transportiert werden.

Aus der DE 10 2013 005 327 A1 ist eine Überspannungsschutzanordnung mit mehreren scheibenförmigen Varistoren vorbekannt.

Diese scheibenförmigen Varistoren sind innerhalb eines, einen Hohlraum einschließenden Gehäuses angeordnet und elektrisch kontaktiert.

Das vorbekannte Gehäuse ist als Vieleckkörper, insbesondere als Würfel, Quader oder Tetraeder ausgebildet und weist eine Öffnung zum Einbringen der scheibenförmigen Varistoren auf, welche jeweils mit einem Abschnitt oder einem Teil der Gehäuseinnenseitenwandung mechanisch in Verbindung stehen und dort in Anlage kommen. Über das Gehäuse kann eine elektrische Kontaktierung zur Parallelschaltung der eingesetzten Varistoren vorgenommen werden. Weiterhin schaffen großflächige Verbindungen und das diesbezügliche Inkontaktkommen der Varistoren mit der Gehäuseseitenwand einen guten thermischen Übergang zum Zweck des Ableitens von Verlustwärme.

Der Stand der Technik gemäß DE 37 34 214 C2 zeigt eine Anordnung mit einem Varistor, wobei zur Abschaltung des Varistors von einer Spannungsquelle bei dessen Überhitzung die auf beiden Stirnseiten des Varistors vorgesehenen Kontaktflächen mit Zu- und Ableitungen der Spannungsquelle verbunden sind und wobei in einer dieser Leitungen in Varistornähe eine Lotstelle vorgesehen ist. Der Varistor selbst befindet sich in einem napfförmigen Gehäuse, wobei die erste seiner Kontaktflächen an der Innenseite der Gehäusebodenfläche anliegt und das Gehäuse einen Anschluss bildet. Die zweite Seite der Kontaktfläche des Varistors ist mit einer Isoliermasse abgedeckt, wobei eine elektrisch und thermisch leitende Verbindung durch die Isoliermasse hindurch zur Lotstelle besteht. Die Lotstelle und die einen Anschluss bildende Verbindung befinden sich an der dem Varistor abgewandten Oberfläche der Isoliermasse. Eine federnde Kontaktzunge der derart gebildeten thermischen Abtrennvorrichtung ist als Spiralfeder ausgebildet, wobei das äußere Ende dieser Spirale über die Lotstelle mit dem zugehörigen Anschluss und das innere Ende dieser Spirale mit dem zugehörigen Gegenanschluss verbunden ist

Aus der DE 20 2009 018 118 U1 ist ein Überspannungsableiter mit mindestens einem Ableitelement, beispielsweise einem Varistor, sowie eine Abtrennvorrichtung vorbekannt. Die Abtrennvorrichtung dient dazu, das oder die Ableitelemente vom Netz zu trennen. Die Abtrennvorrichtung umfasst eine thermische Trennstelle, welche in den elektrischen Anschlusspfad innerhalb des Ableiters eingebunden ist, wobei über die Trennstelle ein beweglicher Leiterabschnitt oder eine bewegliche leitende Brücke mit dem Ableitelement einerseits und der Leiterabschnitt oder die Brücke andererseits mit einem ersten elektrischen Außenanschluss des Ableiters verbunden ist.

Darüber hinaus ist ein eine Vorspannkraft erzeugendes Mittel, beispielsweise eine Feder vorgesehen. Der Kraftvektor der Feder wirkt unmittelbar oder mittelbar über einen beweglichen Trennbock auf den Leiterabschnitt oder die Brücke in Abtrennrichtung ein. Im oder am Ende des Bewegungswegs des Leiterabschnitts oder der Brücke ist ein leitfähiges Element angeordnet, das bei ausgelöster Abtrennvorrichtung mit dem Leiterabschnitt oder der Brücke in Kontakt gelangt und welches mit einem zweiten elektrischen Außenanschluss in Verbindung steht, um einen Schließer zu bilden.

Darüber hinaus ist gemäß diesem Stand der Technik ein bewegliches Isolationsteil vorgesehen, welches unmittelbar vor oder mit dem Erreichen des Kurzschlusszustands in den Bewegungsverlauf des Leiterabschnitts oder der Brücke eintaucht, um einem Wiederzünden des Lichtbogens zwischen dem leitfähigen Element und der Trennstelle entgegenzuwirken.

Bei der thermisch auslösbaren Abtrennvorrichtung nach DE 37 34 214 ist das schaltende Element als Wechselkontakt ausgebildet. Der Wechselkontakt schließt den Varistorkreis in bekannter Weise über eine Lotstelle. Wird das Schaltelement ausgelöst, wird ein weiterer Kontakt geschlossen, der entweder als interne oder externe Defektanzeige oder über eine entsprechende externe Verbindung als Kurzschluss verschalten werden kann.

Aus der WO 2010/020452 A1 ist ein Überspannungsschutzgerät mit thermischer Abtrennvorrichtung und Fehleranzeige sowie mit mindestens zwei ersten Schutzelementen, insbesondere scheibenförmigen Varistoren, und mindestens einem zweiten Schutzelement, insbesondere Gasableiter, vorbekannt. Weiterhin ist eine thermische Abtrennvorrichtung vorhanden, die ein niedrigschmelzendes Lot oder dergleichen Mittel aufweist. Die ersten Schutzelemente sind so angeordnet, dass jeweils ein Anschlussbein eines Schutzelementes dem Anschlussbein des weiteren Schutzelementes mit einem Abstand gegenüberliegt. Die thermische Abtrennvorrichtung befindet sich überwiegend in dem so gebildeten Abstandsraum. Ein Anschlussbein des zweiten Schutzelementes überbrückt die Anschlussbeine der ersten Schutzelemente im Abstandsraum durch eine Lotkontaktierung. Auf das derartige Brücken-Anschlussbein wirkt ein Finger eines mechanisch vorgespannten Abtrennbockes ein, derart, dass im Überlastfall das Brücken-Anschlussbein räumlich von den Anschlussbeinen der ersten Schutzelemente entfernt wird.

Im Rahmen der zunehmenden Integration von Baugruppen und Bauteilen auf Leiterplattenebene entstehen Probleme bei der Anordnung und Einbindung von Überspannungsschutzgeräten in derartige elektronische Einrichtungen. Die Überspannungsschutzgeräte müssen insofern von ihrem Bauraum möglichst klein ausgeführt werden und sollen zur unmittelbaren Leiterplattenmontage geeignet sein. Weiterhin besteht die Notwendigkeit, trotz geringer Abmessungen und einer recht hohen Packungsdichte die notwendigen elektrischen Trennungsabstände einzuhalten. Letztendlich sind bisher bekannte thermische Abtrennvorrichtungen für den Schutz von Überspannungsschutzelementen bei deren Überlastung ausreichend sensibel zu gestalten, wobei jedoch eine Beeinflussung durch umgebende Wärmequellen anderer elektronischer Baugruppen oder Bauelemente möglich ausgeschlossen werden soll.

Aus dem Vorgenannten ist es daher Aufgabe der Erfindung, eine weiterentwickelte Überspannungsschutzanordnung mit wenigstens einem, auf einer ersten Seite einer n-eckigen Trägerplatte angeordneten, scheibenförmigen Varistor sowie mindestens einem Gasableiter sowie mindestens einer thermischen Abtrenneinrichtung anzugeben, welche in einfacher Weise mit wenigen Bauteilen, reduziertem Bauraum und kostengünstig herstellbar ist. Die zu schaffende Anordnung soll als kompakte Baugruppe so ausgeführt werden, dass sie zur unmittelbaren Montage auf einer Leiterplatte einsetzbar ist. Weiterhin soll die Möglichkeit bestehen, mit einfachen Mittel zu signalisieren, ob die Anordnung funktionsfähig ist und ob bereits eine thermische Überlastung aufgetreten ist.

Die Lösung der Aufgabe erfolgt gemäß der Merkmalskombination nach Anspruch 1, wobei die Unteransprüche mindestens zweckmäßige Ausgestaltungen und Weiterbildungen umfassen.

Es wird demnach von einer Überspannungsschutzanordnung ausgegangen, die mindestens einen, bevorzugt zwei Varistoren aufweist.

Mindestens einer der zwei Varistoren ist auf einer ersten Seite einer n-eckigen Trägerplatte angeordnet. Bevorzugt handelt es sich um eine viereckige Trägerplatte.

Die Varistoren sind als scheibenförmige Varistoren ausgeführt. Weiterhin ist mindestens ein Gasableiter Bestandteil der Überspannungsschutzanordnung. Eine thermische Abtrenneinrichtung steht mit den Überspannungsschutzelementen der Überspannungsschutzanordnung in Verbindung. Bei einer Ausführungsform sind die Varistoren, der Gasableiter und die thermische Abtrenneinrichtung in Reihe geschalten.

Alle vorgenannten Bauteile sind von einem Außengehäuse umgeben. Dieses Außengehäuse kann ein- oder mehrteilig ausgeführt sein. Darüber hinaus sind an sich bekannte Mittel zum elektrischen Anschluss und zum Verlöten der Überspannungsschutzanordnung auf einer Leiterplatte vorgesehen.

Erfindungsgemäß ist der mindestens eine Gasableiter auf der zweiten Seite der n-eckigen Trägerplatte angeordnet. Es ist also mindestens ein Varistor auf einer Seite und der Gasableiter auf der gegenüberliegenden, zweiten Seite der Trägerplatte befindlich.

Die Trägerplatte weist mindestens einen Durchbruch für einen Anschlusskontakt bzw. einer Anschlussfahne des Varistors auf. Auf der zweiten Seite der Trägerplatte, d.h. auf der Seite, auf der sich der Gasableiter befindet, ist zwischen einem Anschluss des Gasableiters und dem Anschlusskontakt des Varistors ein Abstand vorhanden. Es liegen sich also der Anschluss des Gasableiters und der Anschlusskontakt des Varistors beabstandet gegenüber.

In den Abstandsraum ist ein bewegliches Kontaktverbindungsstück einbringbar. Dieses bewegliche Kontaktverbindungsstück ist mit dem Anschluss des Gasableiters einerseits bevorzugt über ein flexibles Kabelstück und mit dem Anschlusskontakt des Varistors andererseits mittels Lot zur Bildung der thermischen Abtrenneinrichtung verbunden. Durch die vorstehend beschriebene Konstruktion wirkt sowohl eine Erwärmung des Gasableiters als auch eine Erwärmung des Varistors auf die thermische Abtrenneinrichtung, d.h. die dortigen Lotstellen, insbesondere auf die Lotstelle zwischen der Anschlussfahne des Varistors und dem beweglichen Kontaktverbindungsstück ein.

Weiterhin ist ein Schieber vorgesehen, welcher einen Dorn aufweist, der eine Ausnehmung im beweglichen Kontaktverbindungsstück durchdringt und eine Vorspannfeder aufnimmt.

Die Vorspannfeder stützt sich einerseits an einem Steg der Trägerplatte bzw. an einem dortigen Vorsprung ab. Andererseits greift die Vorspannfeder am Kontaktverbindungsstück an.

Das freie Ende des Dorns wirkt im nicht ausgelösten Zustand der thermischen Abtrenneinrichtung auf einen Schalter ein und hält diesen in seiner geschlossenen Lage. Im ausgelösten Zustand der thermischen Abtrenneinrichtung gibt der Dorn diesen Schalter, welcher einen Fehlerzustand signalisiert, frei.

In erfindungsgemäßer Weiterbildung ist die thermische Abtrenneinrichtung nebst Kontaktverbindungsstück, Schieber, Dorn und Vorspannfeder doppelt und symmetrisch auf der Trägerplatte ausgeführt, um die jeweiligen Verbindungen zwischen Gasableiter und Varistor im Überlastfall zu trennen. Die quasi doppelte Abtrenneinrichtung sichert unter allen Umständen eine schnelle Abtrennung und ermöglicht ausreichende Trennungsabstände im Abtrennfall.

Bei einer ersten Ausführungsform der Erfindung weist der erwähnte Schalter für die Fernmeldeeinrichtung jeweils zwei Kontakte, ausgebildet als Federstreifen auf, welche in entsprechenden Ausformungen der Trägerplatte fixiert sind. Die Federstreifen bilden im geschlossenen Zustand einen guten und sicheren Flächenkontakt.

Ein erster der Kontakte liegt also flächig am zweiten der Kontakte an, so dass die gewünschte Kontaktverbindung hergestellt ist.

Der Dorn des Schiebers wirkt mit einer Oberflächenseite des ersten Kontaktes zusammen, um bei nicht ausgelöster thermischer Abtrenneinrichtung den geschlossenen Schaltzustand zu sichern.

Bei einer Weiterbildung des einen Fehlerzustand signalisierenden Schalters gemäß zweiter Ausführungsform ist der Schalter als vorgespannte Biegefeder ausgebildet, wobei die Biegefeder zwei feste, an der Trägerplatte befindliche Kontakte überbrückt und diese Kontaktverbindung öffnet, wenn mindestens eine der thermischen Abtrenneinrichtungen ausgelöst wird und das freie Ende des Dorns die Biegefeder freigibt.

Bei einer Weiterbildung der Erfindung weist die Trägerplatte eine Struktur zur Führung des Schiebers und/oder zur Aufnahme der Biegefeder für den Schalter auf.

Der auf der ersten Seite der Trägerplatte befindliche Varistor ist mit einer Abdeckung versehen, welche bei einer Ausbildung der Erfindung Fortsätze zum rastenden Arretieren einer Gehäusekappe aufweist.

Von der Gehäusekappe kann bei einer Weiterbildung der Erfindung eine weitere Trägerplatte umschlossen werden, wobei die weitere Trägerplatte zur Aufnahme mindestens eines weiteren Varistors dient.

Die weitere Trägerplatte ist von der ersten Trägerplatte beanstandet fixiert.

Die beschriebene erfindungsgemäße thermische Abtrenneinrichtung weist ein schnelles Reaktionsvermögen auf und besteht aus einfachen konstruktiven, kostengünstig umsetzbaren Mitteln.

Dadurch, dass sich die thermischen Trennstellen, d.h. die Lotstellen, zwischen den Kontakten von Gasableiter und Varistor befinden, können die vorgenannten Bauteile als Wärmequellen optimal auf die thermische Trennstelle einwirken mit der Folge der gewünschten hohen Sensibilität des Ansprechens.

Anstelle üblicher Mikroschalter wird erfindungsgemäß eine einfache mechanische Schalteinrichtung zur Fehlersignalisierung auf Basis einer Biegefeder oder von Federstreifen realisiert, wobei ein einziges Betätigungs- und Sperrglied, nämlich der Schieber mit Dorn, sowohl Bestandteil der thermischen Abtrenneinrichtung als auch Bestandteil des Schalters der Fernmeldeeinrichtung ist.

Die Erfindung soll nachstehend anhand eines Ausführungsbeispiels sowie unter Zuhilfenahme von Figuren näher erläutert werden.

Hierbei zeigen:
- Fig. 1: eine perspektivische Explosivdarstellung einer ersten Ausführungsform der erfindungsgemäßen Überspannungsschutzanordnung mit einer Schalteinrichtung zur Fehlerfernmeldung auf der Basis von zwei Flächenkontakten;
- Fig. 2: eine Draufsicht bezüglich der Abtrenneinrichtungen der ersten Ausführungsform im geschlossenen Zustand und Fig. 3 im abgetrennten Zustand;
- Fig. 4: eine Darstellung ähnlich derjenigen nach Fig. 1, jedoch mit einer Schalterausführung zur Fehlermeldung unter Nutzung einer Biegefeder, welche mit zwei festen, an der Trägerplatte befindlichen Kontakten zusammenwirkt und wobei die Biegefeder vom Dorn des Schiebers der thermischen Trenneinrichtung blockiert bzw. freigegeben wird;
- Fig. 5: und 6 Darstellungen der Abtrenneinrichtungen gemäß Ausführung nach Fig. 4 im geschlossenen (Fig. 5) und abgetrennten (Fig. 6) Zustand.

Bei beiden Ausführungsbeispielen wird von mindestens einer n-eckigen ersten Trägerplatte 5 ausgegangen, die vorzugsweise aus einem Kunststoff-Spritzgussmaterial besteht.

Diese Trägerplatte 5 weist auf ihrer einen Seite einen Varistor 6 auf. Dieser besitzt einen N-Pol Anschluss 8.

Auf der dem Varistor 6 gegenüberliegenden Seite befindet sich auf der Trägerplatte 5 ein Gasableiter 18.

Bei den gezeigten Ausführungsformen ist beabstandet von der Trägerplatte 5 eine weitere Trägerplatte 3 vorhanden, die einen weiteren Varistor 2 mit Anschlüssen 4 aufnimmt.

Neben der bodenseitigen Abdeckung 7, die die Unterseite des Varistors 6 verschließt, ist das Außengehäuse durch die Kappe 1 realisiert, wobei die Verbindung zwischen der Abdeckung 7 und der Kappe 1 durch Rastnasen im Sinne einer Snap-in-Verbindung realisiert ist.

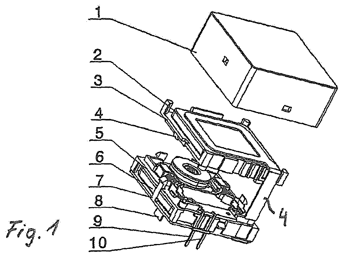

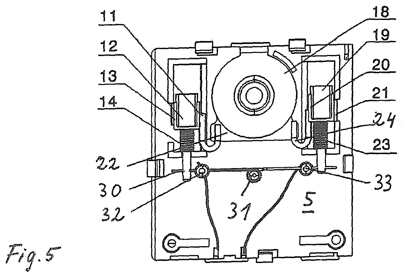

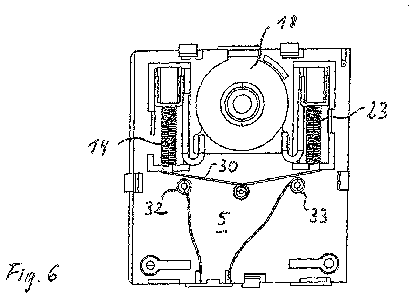

Der eigentliche Abtrennmechanismus gemäß den Fig. 1 bis 3 und 4 bis 6 ist wie folgt aufgebaut.

Die Trägerplatte 5 weist mindestens einen, im gezeigten Ausführungsbeispiel aufgrund der symmetrischen Anordnung der Abtrenneinrichtungen zwei Durchbrüche für einen Anschlusskontakt 21 des betreffenden Varistors 6 bzw. einen Außenanschluss auf.

Kontakte 22 des Gasableiters 18 sind über einen flexiblen Leiter 11 bzw. 24 an einem Kontaktverbindungsstück 13 bzw. 20 angeschlossen.

Dieses Kontaktverbindungsstück 13 bzw. 20 ist verschiebebeweglich, jedoch im Ausgangszustand mit dem entsprechenden Gasableiter- bzw. Varistoranschluss über eine Lotstelle verbunden.

Weiterhin ist je ein Schieber 12; 19 vorhanden, der an einer Seite einen dornartigen Fortsatz aufweist.

Der jeweilige Schieber 12; 19 sitzt im Innenraum des beweglichen Kontaktverbindungsstücks 13; 20, das eine z.B. U-Gestalt aufweist.

Federn 14; 23 üben eine Vorspannkraft auf das bewegliche Kontaktstück 13; 20 und den Schieber aus.

Die Vorspannfedern 14 bzw. 23 stützen sich einerseits an einem Steg der Trägerplatte 5 und andererseits am jeweiligen Kontaktverbindungsstück 13; 20 ab.

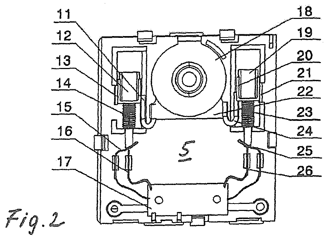

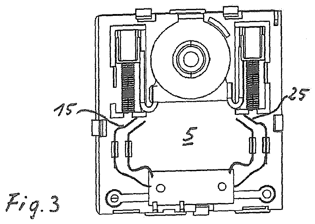

Das freie Ende des Dorns wirkt im nicht ausgelösten Zustand der thermischen Abtrenneinrichtung auf je einen Schalter, gebildet durch die Teile 15; 16; 25; 26, ein und hält diesen Schalter in geschlossener Lage (Fig. 2). Im ausgelösten Zustand der thermischen Abtrenneinrichtung wird der Schalter freigegeben (Fig.3).

In der Ausführungsform nach Fig. 1 ist der vorerwähnte Schalter durch zwei Kontakte 15; 16 bzw. 25; 26 realisiert, welche in entsprechenden Ausformungen der Trägerplatte 5 fixiert sind. Die Schalter sind elektrisch zu einer Leiterplatte 17 geführt und stehen mit Pins 9 und 17 in Verbindung.

Ein erster der Kontakte 15; 25 liegt flächig am zweiten der Kontakte 16; 26 an und stellt die Kontaktverbindung her.

Der jeweilige bewegliche Schieber 12; 19 wirkt mit einer Oberflächenseite des ersten Kontakts zusammen, um bei nicht ausgelöster thermischer Abtrenneinrichtung den geschlossenen Schaltzustand zu sichern und diesen geschlossenen Schaltzustand bei ausgelöster Abtrenneinrichtung freizugeben.

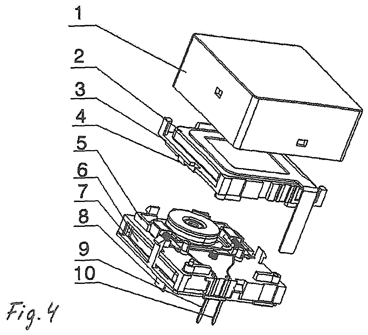

Bei der Ausführungsform nach den Fig. 4 bis 6 ist der Schalter unter Rückgriff auf eine Biegefeder 30 mit zwei Enden und einer zentralen Achse 31 ausgebildet, wobei die Biegefeder 32 zwei feste, an der Trägerplatte 5 befindliche Kontakte 32; 33 überbrückt und diese Kontaktverbindung öffnet, wenn die Abtrenneinrichtung ausgelöst wird und das freie Ende des Dorns die Biegefeder 30 freigibt.

Anschlusspins 9 und 10 stehen auch hier mit den jeweiligen Schaltern in Verbindung, so dass das Fernmeldesignal nach extern übertragen werden kann.

Die erwähnten Bauteile, insbesondere die thermische Abtrenneinrichtung nebst Kontaktverbindungsstück, Schalter, Dorn und Vorspannfeder sind doppelt und symmetrisch auf der Trägerplatte 5 ausgebildet, um die jeweiligen Verbindungen zwischen Gasableiter und Varistor im Überlastfall zu trennen. Es liegt also hier eine redundante, jeweilige Abtrenneinrichtung mit redundanter Möglichkeit der Fehlermeldung, hoher Funktionsfähigkeit und Gewährleistung der notwenigen Trennungsabstände vor.

## Patentansprüche

1. Überspannungsschutzanordnung mit mindestens einem, auf einer ersten Seite einer n-eckigen Trägerplatte (5) angeordneten, scheibenförmigen Varistor (6), mindestens einem Gasableiter (18) sowie mindestens einer thermischen Abtrenneinrichtung, welche mit dem mindestens einen Varistor (6) im engen thermischen Kontakt steht, wobei die vorgenannten Bauteile von einem Außengehäuse (1; 7) umgeben und weiterhin Mittel zum elektrischen Anschluss zum Verlöten auf einer Leiterplatte vorgesehen sind,
**dadurch gekennzeichnet, dass**
der mindestens eine Gasableiter (18) auf einer zweiten Seite der n-eckigen Trägerplatte (5) angeordnet ist, die Trägerplatte (5) mindestens einen Durchbruch für einen Anschlusskontakt (21) des Varistors (6) aufweist, auf der zweiten Seite der Trägerplatte (5) sich mindestens ein Anschluss (22) des Gasableiters (18) und der Anschlusskontakt (21) des Varistors (6) beabstandet gegenüberliegen, wobei in dem Abstandsraum ein bewegliches Kontaktverbindungsstück (13; 20) befindlich ist, das bewegliche Kontaktverbindungsstück (13; 20) mit dem Anschluss (22) des Gasableiters (18) einerseits und dem Anschlusskontakt (21) des Varistors (6) mittels niedrigschmelzendem Lot zur Bildung der thermischen Abtrenneinrichtung andererseits verbunden ist, derart, dass sowohl eine Erwärmung des Gasableiters (18) als auch des Varistors (6) auf die thermische Abtrenneinrichtung einwirkt, weiterhin ein Schieber (12; 19) vorgesehen ist, welcher einen Dorn aufweist, der eine Ausnehmung im beweglichen Kontaktverbindungsstück (13; 20) durchdringt und eine Vorspannfeder (14; 23) aufnimmt, wobei die Vorspannfeder (14; 23) sich einerseits an einem Steg der Trägerplatte (5) abstützt und andererseits am Kontaktverbindungsstück (13; 20) angreift und das freie Ende des Dorns im nicht ausgelösten Zustand der thermischen Abtrenneinrichtung auf einen Schalter (15; 16; 25; 26; 30; 32; 33) einwirkt und diesen in geschlossener Lage hält sowie im ausgelösten Zustand der thermischen Abtrenneinrichtung freigibt.

2. Überspannungsschutzanordnung nach Anspruch 1,
**dadurch gekennzeichnet, dass**
die thermische Abtrenneinrichtung nebst Kontaktverbindungsstück (13; 20), Schieber (12; 19), Dorn und Vorspannfeder (14; 23) doppelt und symmetrisch auf der Trägerplatte (5) ausgebildet sind, um die jeweiligen Verbindungen zwischen Gasableiter (18) und Varistor (6) im Überlastfall zu trennen.

3. Überspannungsschutzanordnung nach Anspruch 1 oder 2,
**dadurch gekennzeichnet, dass**
der Schalter jeweils zwei Kontakte (15; 16; 25; 26) aufweist, welche in Ausformungen der Trägerplatte (5) fixiert sind, wobei ein erster der Kontakte (15; 25) am zweiten der Kontakte (16; 26) anliegt und die Kontaktverbindung herstellt sowie der Dorn des Schiebers (12; 19) mit einer Oberflächenseite des ersten Kontakts (15; 25) in Verbindung steht, um bei nicht ausgelöster thermischer Abtrenneinrichtung den geschlossenen Schaltzustand zu sichern.

4. Überspannungsschutzanordnung nach Anspruch 3,
**dadurch gekennzeichnet, dass**
mindestens der erste Kontakt (15; 25) als Federkontakt ausgebildet ist, derart, um bei Fortfall der Wirkverbindung des Dorns den Schalter zu öffnen.

5. Überspannungsschutzanordnung nach Anspruch 1 oder 2,
**dadurch gekennzeichnet, dass**
der Schalter als Biegefeder (30) ausgebildet ist, wobei die Biegefeder (30) zwei feste, an der Trägerplatte (5) befindliche Kontakte (32; 33) überbrückt und diese Kontaktverbindung öffnet, wenn die thermische Abtrenneinrichtung ausgelöst wird und das freie Ende des Dorns die Biegefeder (30) freigibt.

6. Überspannungsschutzanordnung nach Anspruch 5,
**dadurch gekennzeichnet, dass**
die Trägerplatte (5) eine Struktur zur Führung des Schiebers und/oder zur Aufnahme der Biegefeder (30) aufweist.

7. Überspannungsschutzanordnung nach einem der vorangegangenen Ansprüche,
**dadurch gekennzeichnet, dass**
der auf der ersten Seite der Trägerplatte (5) befindliche Varistor (6) mit einer Abdeckung (7) versehen ist, welche Fortsätze zum rastenden Arretieren einer Gehäusekappe (1) aufweist.

8. Überspannungsschutzanordnung nach Anspruch 7,
**dadurch gekennzeichnet, dass**
von der Gehäusekappe (1) umschlossen eine weitere Trägerplatte (3) zur Aufnahme eines weiteren Varistors (2) befindlich ist, wobei die weitere Trägerplatte (3) von der ersten Trägerplatte (5) beabstandet angeordnet ist.

## Claims

1. Overvoltage protection arrangement having at least one disc-shaped varistor (6) arranged on a first side of an n-cornered carrier plate (5), at least one gas discharge means (18) as well as at least one thermal separating means in close thermal contact with the at least one varistor (6), wherein the components mentioned above are surrounded by an external housing (1; 7), and means for the electrical connection to be soldered on a circuit board are furthermore provided,
**characterized in that**
the at least one gas discharge means (18) is arranged on a second side of the n-cornered carrier plate (5), the carrier plate (5) has at least one through-hole for a terminal contact (21) of the varistor (6), on the second side of the carrier plate (5) at least one terminal (22) of the gas discharge means (18) and the terminal contact (21) of the varistor (6) are facing each other across a distance, wherein a movable contact connecting piece (13; 20) is located in the distance space, the movable contact connecting piece (13; 20) being connected on one side to the terminal (22) of the gas discharge means (18) and on the other to the terminal contact (21) of the varistor (6) by means of low melting solder for forming the thermal separating means such that both heating of the gas discharge means (18) and of the varistor (6) will act upon the thermal separating means, furthermore, a slide (12; 19) comprising a spike is provided which penetrates a recess in the movable contact connecting piece (13; 20) and receives a pre-stressing spring (14; 23), wherein the pre-stressing spring (14; 23) is supported on one side against a web of the carrier plate (5) and on the other side engages the contact connecting piece (13; 20), and in the non-triggered state of the thermal separating means, the free end of the spike acts upon a switch (15; 16; 25; 26; 30; 32; 33) and keeps the same in closed position, and releases the switch in the triggered state of the thermal separating means.

2. Overvoltage protection arrangement according to claim 1,
**characterized in that**
the thermal separating means along with the contact connecting piece (13; 20), slide (12; 19), spike and pre-stressing spring (14; 23) is implemented twice and in symmetry on the carrier plate (5) in order to disconnect the respective connections between the gas discharge means (18) and varistor (6) in the event of overload.

3. Overvoltage protection arrangement according to claim 1 or 2,
**characterized in that**
the switch comprises in each case two contacts (15; 16; 25;26) fixed in formations of the carrier plate (5), wherein a first of the contacts (15; 25) abuts against the second of the contacts (16; 26) and establishes the contact connection, and the spike of the slide (12; 19) is in communication with an upper surface side of the first contact (15; 25) so as to ensure the closed switching state when the thermal separating means is not triggered.

4. Overvoltage protection arrangement according to claim 3,
**characterized in that**
at least the first contact (15; 25) is formed as a spring contact so as to open the switch when the operative connection of the spike is removed.

5. Overvoltage protection arrangement according to claim 1 or 2,
**characterized in that**
the switch is formed as a bending spring (30), wherein the bending spring (30) bridges two fixed contacts (32; 33) located on the carrier plate (5), and opens this contact connection when the thermal separating means is triggered and releases the free end of the spike of the bending spring (30).

6. Overvoltage protection arrangement according to claim 5,
**characterized in that**
the carrier plate (5) includes a structure for guiding the slide and/or receiving the bending spring (30).

7. Overvoltage protection arrangement according to any one of the preceding claims,
**characterized in that**
the varistor (6) located on the first side of the carrier plate (5) is provided with a cover (7) which includes extensions for snap-in locking a housing lid (1).

8. Overvoltage protection arrangement according to claim 7,
**characterized in that**
a further carrier plate (3) enclosed by the housing lid (1) is provided for receiving a further varistor (2), wherein the further carrier plate (3) is arranged to be spaced from the first carrier plate (5).

## Revendications

1. Ensemble de protection contre les surtensions comportant au moins une varistance (6) en forme de disque disposée sur une première face d'une plaque de support (5) à n côtés, au moins un dérivateur à gaz (18) et au moins un dispositif de séparation thermique qui est en contact thermique intime avec ladite au moins une varistance (6), les composants susmentionnés étant entourés par un boîtier extérieur (1 ; 7) et il est en outre prévu des moyens de connexion électrique pour le brasage sur une carte à circuit imprimé,
**caractérisé en ce que**
ledit au moins un dérivateur à gaz (18) est disposé sur une deuxième face de la plaque de support (5) à n côtés,
la plaque de support (5) présente au moins une traversée pour un contact de raccordement (21) de la varistance (6),
sur la deuxième face de la plaque de support (5), au moins un raccord (22) du dérivateur à gaz (18) et le contact de raccordement (21) de la varistance (6) sont opposés à distance l'un de l'autre,
une pièce de raccordement de contact (13 ; 20) mobile se trouve dans l'espacement,
la pièce de raccordement de contact (13 ; 20) mobile est reliée d'une part au raccord (22) du dérivateur à gaz (18) et d'autre part au contact de raccordement (21) de la varistance (6) au moyen d'une brasure à bas point de fusion pour former le dispositif de séparation thermique, de telle sorte qu'un échauffement du dérivateur à gaz (18) et de la varistance (6) agit sur le dispositif de séparation thermique,
il est en outre prévu un curseur (12 ; 19) qui comporte un téton qui pénètre dans un évidement dans la pièce de raccordement de contact (13 ; 20) mobile et qui reçoit un ressort de précontrainte (14 ; 23),
le ressort de précontrainte (14 ; 23) s'appuie d'une part sur une âme de la plaque de support (5) et s'engage d'autre part sur la pièce de raccordement de contact (13 ; 20),
et l'extrémité libre du téton agit sur un commutateur (15 ; 16 ; 25 ; 26 ; 30 ; 32 ; 33), et le maintient en position fermée, dans l'état non déclenché du dispositif de séparation thermique, et le libère, dans l'état déclenché du dispositif de séparation thermique.

2. Ensemble de protection contre les surtensions selon la revendication 1,
**caractérisé en ce que**
le dispositif de séparation thermique tout comme la pièce de raccordement de contact (13 ; 20), le curseur (12 ; 19), le téton et le ressort de précontrainte (14 ; 23) sont réalisés en double et symétriquement sur la plaque de support (5) afin de séparer, en cas de surcharge, les liaisons respectives entre le dérivateur à gaz (18) et la varistance (6).

3. Ensemble de protection contre les surtensions selon la revendication 1 ou 2,
**caractérisé en ce que**
le commutateur comprend deux contacts respectifs (15 ; 16 ; 25 ; 26) qui sont fixés dans des conformations de la plaque de support (5),
un premier des contacts (15 ; 25) est en appui contre le second des contacts (16 ; 26) et établit la liaison de contact, et
le téton du curseur (12 ; 19) est en liaison avec un côté de surface du premier contact (15 ; 25) pour sécuriser l'état de commutation fermé, lorsque le dispositif de séparation thermique n'est pas déclenché.

4. Ensemble de protection contre les surtensions selon la revendication 3,
**caractérisé en ce que**
au moins le premier contact (15 ; 25) est réalisé sous forme de contact élastique de manière à ouvrir le commutateur en cas d'interruption de la liaison active du téton.

5. Ensemble de protection contre les surtensions selon la revendication 1 ou 2,
**caractérisé en ce que**
le commutateur est réalisé sous forme de ressort flexible (30),
et le ressort flexible (30) ponte deux contacts fixes (32 ; 33) situés sur la plaque de support (5) et ouvre cette liaison de contact lorsque le dispositif de séparation thermique est déclenché et que l'extrémité libre du téton libère le ressort flexible (30).

6. Ensemble de protection contre les surtensions selon la revendication 5,
**caractérisé en ce que**
la plaque de support (5) présente une structure pour guider le curseur et/ou pour recevoir le ressort flexible (30).

7. Ensemble de protection contre les surtensions selon l'une des revendications précédentes,
**caractérisé en ce que**
la varistance (6) située sur la première face de la plaque de support (5) est pourvue d'un recouvrement (7) qui comprend des prolongements pour arrêter par enclenchement un capuchon de boîtier (1).

8. Ensemble de protection contre les surtensions selon la revendication 7,
**caractérisé en ce que**
il est prévu une autre plaque de support (3) enfermée par le capuchon de boîtier (1) et destinée à recevoir une autre varistance (2), l'autre plaque de support (3) étant disposée à distance de la première plaque de support (5).
